# EUROPEAN PATENT SPECIFICATION

(11) **EP 0 435 359 B1**
(45) Date of publication and mention of the grant of the patent: **04.10.1995**
(21) Application number: 90203132.7
(22) Date of filing: 26.11.1990
(51) Int. Cl.: B07B 1/14

(54) **Bulk hopper device for agricultural products**
Schüttvorrichtung für Landwirtschaftsprodukte
Trémie pour des produits agricoles

(30) Priority: 24.11.1989 NL 8902907
(43) Date of publication of application: 03.07.1991
(73) Proprietor: Zijlstra & Bolhuis B.V., NL-9645 LA Veendam (NL)
(72) Inventor: Pastoor, Hendrik, 9641 JK Veendam (NL); Middel, Jan, 9648 HL Annen (NL)
(74) Representative: Smulders, Theodorus A.H.J., Ir.

(56) References cited:
- EP-A- 0 101 637
- DE-A- 3 027 651
- FR-A- 1 491 435
- US-A- 1 899 292

## Description

This invention relates to a bulk hopper device for agricultural products, comprising a frame, a conveyor bottom and a roller screen unit, the conveyor bottom being capable of feeding agricultural products via a discharge end to said roller screen unit, whose rollers are disposed substantially transversely to the direction of transport of the conveyor bottom.

Such a bulk hopper device is known from EP-A-0,101,637. In the known bulk hopper device the roller screen is disposed lower than the proximal end of the conveyor bottom, the difference in height between them being fixed, so that at the end of the conveyor bottom the agricultural products will drop over a fixed distance before being received by the rollers of the roller screen.

According to the invention the distance over which the products will drop should be adjustable. A relatively large height of drop may be desirable, for instance in the case of potatoes with much clay stuck to them. The fall of the potatoes may then have a positive, cleaning effect.

The drop of height should be as small as possible to prevent damage for products that are easily injured and/or are less contaminated with soil and/or clay and the like. Newly lifted seed potatoes, for instance, are such products that are easily injured.

Therefore, in accordance with the invention, there is a need for a bulk hopper device that can be used irrespective of the desired drop of height between the conveyor bottom and the roller screen unit. It is an object of the invention to provide for the need outlined. To that effect, according to the invention, a bulk hopper device of the type described is characterized in that an end of the roller screen unit is mounted on assembly parts, said assembly parts extending between said roller screen unit and said frame and being connected, near their free ends, to the roller screen unit and the frame, respectively, so that the height of at least the end of the roller screen unit adjacent to the conveyor bottom is adjustable relatively to the discharge end of the conveyor bottom, the assembly parts comprising two mounting plates between which the end of the roller screen unit adjacent to the discharge end of the conveyor bottom is mounted, wherein the mounting plates are each provided with an arm which has an end remote from the roller screen unit, wherein the ends of the arms remote from the roller screen unit are pivotably connected to the frame, and wherein between a fixed frame portion of the bulk hopper device on the one hand and a portion of the roller screen unit or the assembly parts on the other, at least one adjustable arm is arranged.

US-A-1,899,292 describes a device with a secondary roller screen unit which is adjustable in a vertical direction. The secondary roller screen unit is rotatably supported on a shaft of a first roller screen unit so that the height of the secondary roller screen unit is adjustable adjacent the discharge end of the first roller screen unit.

One embodiment of the invention will now be described with reference to the accompanying drawings, in which:
Fig. 1 diagrammatically shows a side view of one example of a known bulk hopper device;
Fig. 2 diagrammatically shows a cutaway side view of a part of an embodiment of a bulk hopper device with a roller screen unit according to the invention.

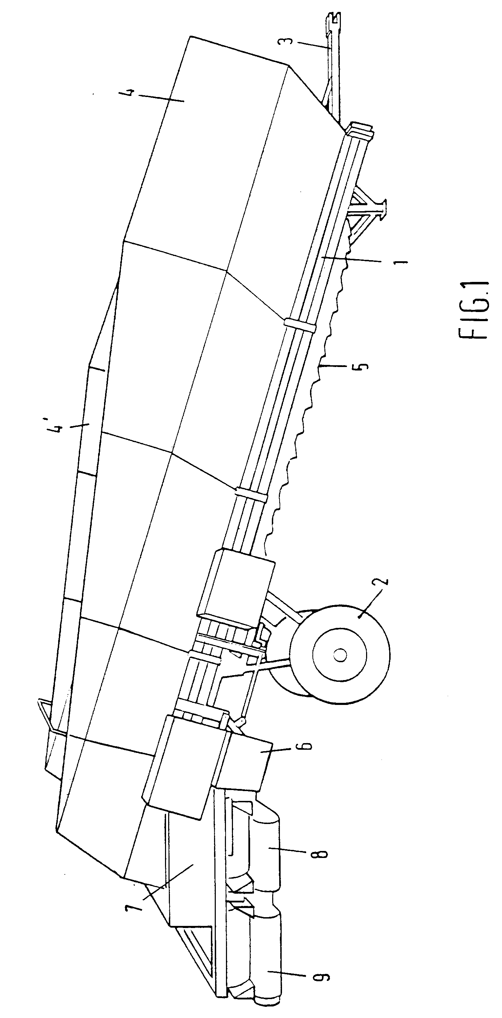

The known bulk hopper device, of which Fig. 1 diagrammatically shows a side view, comprises a frame 1, which is mobile owing to the provision of wheels 2 and a draw bar 3. The bulk hopper proper is formed by upright sidewalls 4,4', between which is disposed an endless conveyor bottom having an upwardly inclined elevation path and a bottom return run, which is designated by 5. The conveyor bottom is driven by a drive unit 6 arranged adjacent to the upper end of the elevation path. Disposed beyond the upper end of the elevation path is a roller screen unit, diagrammatically shown at 7. Disposed underneath the roller screen unit is a transverse conveyor 8 for discharging material passed through the roller screen unit. In operation, the rollers of the roller screen unit are driven in such a manner that the products are transported by the rollers to a second transverse conveyor 9, capable of transporting the products further.

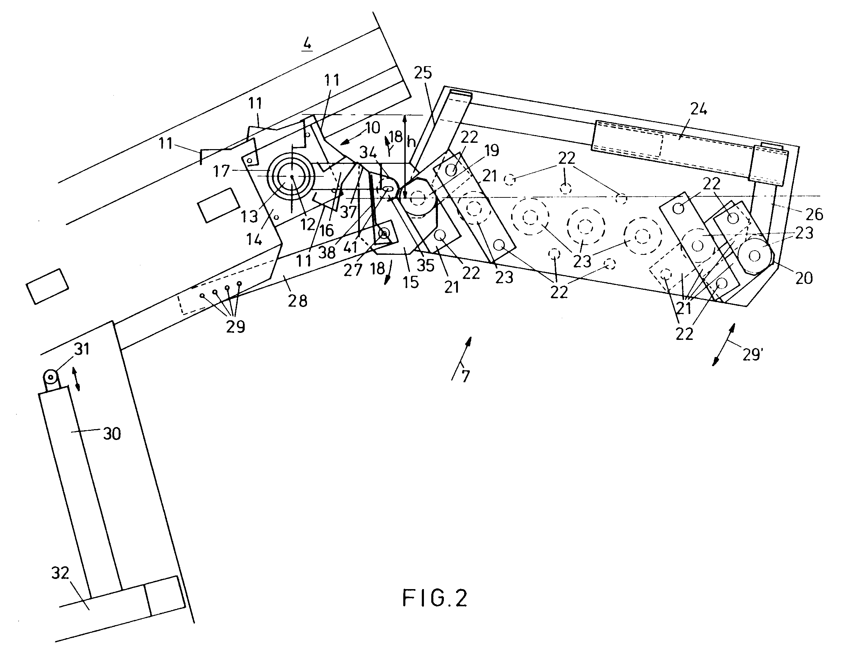

Fig. 2 diagrammatically shows a side-elevational view of a part of one embodiment of a bulk hopper device according to the invention. More particularly, Fig. 2 shows the upper part of the conveyor bottom 10 connecting to a roller screen unit 7. In the example shown, the conveyor bottom is built up from slats 11 overlapping in the direction of transport like roof tiles, as described, for instance, in GB-A-2,096,557. The slats form an endless conveyor bottom having a stepped closed bottom in the elevation path of the conveyor bottom. Disposed at the upper end and the lower end of the conveyor bottom is a reversing path where the slats of the conveyor bottom of the elevation path pass into the downward path and the other way around. To that end, at the upper end of the bulk hopper, the slats traverse a semicircular path, as shown, whose centre is indicated at 12.

It is observed that the invention can be used irrespective of the nature of the conveyor bottom. Accordingly, the conveyor bottom may be made of wire, tape, cloth, etc., which may or may not be formed as slats.

Provided on opposite longitudinal sides of the conveyor bottom are sidewalls, Fig. 2 showing one of them.

The centre 12 of the semicircular reversing path of the conveyor bottom is in the centreline of a shaft 13 of a reversing roller for the conveyor bottom. In this embodiment, the shaft 13 is bearing-mounted at each end in a plate 14 which is secured to the frame of the bulk hopper device.

Further, mounted on opposite sides of the device are mounting plates 15 for mounting the roller screen unit 7. In this embodiment the mounting plates 15 are each provided with an arm 16 which extends rearwardly from the mounting plate 15 and at the end remote from the mounting plate is provided with a sleeve 17 which is bearing-mounted on the shaft 13 and can be rotated relatively to the shaft 13.

Owing to this construction, therefore, the mounting plates 15 can be pivoted relatively to the centreline 12, as indicated by arrows 18.

Mounted between the mounting plates 15 is the first roller 19 of the roller screen unit. In a known manner, the roller screen unit further comprises two shear arms 20 secured to the mounting plates, having mutually hinging arm members 21, only a part of which are shown. The hinge joints of the arm members are indicated at 22. Bearing-mounted between the two shear arms are rollers 23, the bearing points of the rollers 23 as well as those of the roller 19 also being the hinge joints of the shear arms.

The rollers 19 and 23 are of mutually parallel extension, the centrelines of the rollers in practice being mostly in a plane that is slightly downwardly inclined from the roller 19. By extending or shortening the shear arms, the interspace between the rollers can be adjusted. For that purpose, in this embodiment a telescopic arm 24 is used, which via arms 25,26 is coupled to the shafts of, for instance, the first and the last roller of the screen unit. Optionally, means (not shown) may be provided for automatically and alternately sliding the telescopic arm in and out during the operation of the bulk hopper device, so that the interspace between the screen rollers varies automatically and continuously in operation, as described in EP-A-0,101,637.

The position of the mounting plates 15 determines the difference in height h between the end of the conveyor bottom and the beginning of the roller screen unit. The position of the mounting plates 15 is adjustable owing to the fact that at least one mounting plate is provided with an arm 28 coupled to the mounting plate at 27 for hinge movement. The arm 28 extends rearwardly and its other end is adjustably connected to the frame of the bulk hopper. When the arm 28 is moved forwards or backwards, the mounting plate hinges respectively counter-clockwise and clockwise relatively to point 12, which makes the drop of height h smaller and greater, respectively.

The arm 28 may be adjustably connected to the frame of the bulk hopper in various ways. For instance, a pin can be used, which, at different points, can be passed through the arm in an appropriate opening in a frame portion. By way of example, such openings are diagrammatically indicated at 29. Preferably, a stepless adjusting device is used. The arm 28 may for instance be provided with a rack, which cooperates with a cogwheel directly or indirectly drivable by means of a crank for moving the arm forwards or backwards.

When the drop of height h is changed in the manner described, the inclination of the roller screen unit also changes. This change of inclination can be compensated by making the free end of the roller screen unit remote from the conveyor bottom height-adjustable, as diagrammatically indicated by an arrow 29. In view of a proper connection to further installations, however, it is often important for the end of the roller screen unit to have a fixed height. To enable yet the angle of inclination of the roller screen unit to be set or adjusted to the position of the mounting plates 15, the bulk hopper device may be provided with means for adjusting the height of the portion of the conveyor bottom adjacent to the roller screen unit. For that purpose, hydraulic cylinders, as diagrammatically shown at 30, may be arranged between a portion 31 of the frame that supports the conveyor bottom and a fixed portion 32 of the frame of the bulk hopper device.

In the embodiment shown a conveyor bottom is used which is built up from slats made of hard material, for instance galvanized steel. Due to the form of the slats, the distance between the first roller 19 and the slats varies strongly in operation, so that a gap of continuously varying width is present. It is preferable for this gap to be covered to prevent agricultural products, tops, clay or rocks from falling into the gap and jeopardizing the proper operation of the device.

In the embodiment shown the gap is closed by means of a flexible and yet firm strip 34, which may for instance be made of plastic and which is partly wound on a support roller 35 mounted between the mounting plates 15 adjacent to the first roller 19 of the roller screen unit and which is secured thereto along one longitudinal edge.

The strip has its longitudinal edge remote from the support roller 35 secured to a scraping member 36 made from sheet material and having a scraping edge 38 pre-tensioned into contact with the conveyor bottom. The pre-tension has been selected such that in operation the scraping edge is continuously in contact with the facing slat of the conveyor bottom and follows its contour. The strip 34 can follow this movement owing to the fact that when the strip is being pushed in the direction of the support roller by the scraping member, the strip causes the support roller to rotate clockwise so that the strip will wind further on the support roller.

The scraping member comprises a scraping edge resting against the slats at a suitable angle and, in this embodiment, a downwardly extending resilient portion which is mounted on the frame of the device spaced from the scraping edge, and presses the scraping edge against the conveyor bottom.

It is observed that the scraping member could also have a different form and/or be pushed or pulled against the slats by separate springs.

In the case where a conveyor bottom of different type is used, for instance one made from cloth, which does not have a form such that the distance between the bottom and the roller screen unit varies strongly, the cover strip and, if desired, the scraping member can be omitted. The arms 16 may then be shorter. In the embodiment shown a slotted hole 41 is provided in the mounting plates 15 for mounting the support roller 35, so that the distance between the support roller and the first roller of the roller screen unit is adjustable.

The cover strip may in a simple manner be secured to the scraping member via an angle section of suitable material. Alternatively, the cover strip may be secured directly to the scraping edge.

It is observed that after the foregoing various modifications will readily occur to the skilled worker. Thus, for mounting the cover strip, instead of a support roller a different suitable section, for instance a semi-circular section, can be used. The arm 28 may be adjustable by means of a screwed spindle, for instance.

Nor is it strictly necessary for the point of rotation of the arms 16 to coincide with the centre of the semi-circular reversing path of the conveyor bottom.

Further, the arms 28 disposed on opposite sides of the bulk hopper device may be interconnected via a cross-girder, and both arms may be provided with an adjusting device. Alternatively, one of the arms may be provided with an adjusting device and the other with appropriate guiding means. Preferably, the adjusting device is so constructed that for height adjustment operation from one of the sides of the bulk hopper device is sufficient.

One or more arms which are adjustably mounted between the roller screen unit and the frame in a different manner may also be used.

## Claims

1. A bulk hopper device for agricultural products, comprising a frame (1), a conveyor bottom (5) and a roller screen unit (7), the conveyor bottom being capable of feeding agricultural products via a discharge end to said roller screen unit, whose rollers are disposed substantially transversely to the direction of transport of the conveyor bottom, characterized in that an end of the roller screen unit (7) is mounted on assembly parts (15,16), said assembly parts extending between said roller screen unit (7) and said frame (1) and being connected, near their free ends, to the roller screen unit (7) and the frame (1), respectively, so that the height of at least the end of the roller screen unit (7) adjacent to the conveyor bottom (5) is adjustable relatively to the discharge end of the conveyor bottom, the assembly parts (15,16) comprising two mounting plates (15) between which the end of the roller screen unit (7) adjacent to the discharge end of the conveyor bottom (5) is mounted, wherein the mounting plates (15) are each provided with an arm (16) which has an end remote from the roller screen unit (7), wherein the ends of the arms (16) remote from the roller screen unit (7) are pivotably connected to the frame (1), and wherein between a fixed frame portion of the bulk hopper device on the one hand and a portion of the roller screen unit (7) or the assembly parts (15,16) on the other, at least one adjustable am (28) is arranged.

2. A bulk hopper device according to claim 1, characterized in that the assembly parts (15,16) are pivotably connected to the frame (1) relatively to a centreline (12) extending transversely to the direction of transport.

3. A bulk hopper device according to claim 2, characterized in that said centreline (12) coincides with the centreline (12) of a semi-circular reversing path traversed at the discharge end by the conveyor bottom (5) in operation.

4. A bulk hopper device according to claim 2 or 3, characterized in that the assembly parts (15,16) are pivotably connected to a shaft (13), which is also the shaft of a reversing roller of the conveyor bottom.

5. A bulk hopper device according to claim 1, characterized in that the ends of the arms (16) remote from the roller screen unit (7) support in operation a sleeve (17) mounted on a pivotal shaft (13).

6. A bulk hopper device according to claim 1, characterized in that the adjustable am (28) is pivotably coupled to at least one of the mounting plates (15).

7. A bulk hopper device according to claim 1, characterized in that the position of the adjustable arm (28) is adjustable by means of a rack-and-pinion device.

8. A bulk hopper device according to any one of the preceding claims, characterized in that the end of the roller screen unit (7) remote from the conveyor bottom (5) is height-adjustably (29) mounted.

9. A bulk hopper device according to any one of claims 1-8, characterized by adjusting means (30) for adjusting the height of the discharge end of the conveyor bottom (5).

10. A bulk hopper device according to claim 9, characterized in that the end of the roller screen unit (7) remote from the conveyor bottom (5) is mounted at a fixed height.

11. A bulk hopper device according to any one of the preceding claims, characterized in that the distance between the rollers (23) of the roller screen unit (7) is variable.

12. A bulk hopper device according to any one of the preceding claims, characterized by sealing means (34) which seal the space between the conveyor bottom (5) and the first roller (19) of the roller screen unit.

13. A bulk hopper device according to claim 12, characterized in that the sealing means comprise a flexible cover strip (34).

14. A bulk hopper device according to claim 13, characterized in that the flexible cover strip (34) has one longitudinal edge secured to a scraping member (36) pre-tensioned into contact with the conveyor bottom (5).

15. A bulk hopper device according to claim 14, characterized in that the cover strip (34) has its other longitudinal edge secured to a pivotable elongate support member (35) arranged adjacent to the first roller (19) of the roller screen unit (7) and is disposed around the support member (35) over at least a portion of the circumference thereof.

16. A bulk hopper device according to claim 15, characterized in that the support member (35) is a rotatable support roller.

17. A bulk hopper device according to claim 15 or 16, characterized in that the elongate support member (35) is mounted at an adjustable distance from the first roller (19) of the roller screen unit (7).

## Patentansprüche

1. Schüttvorrichtung für landwirtschaftliche Produkte mit einem Rahmen (1), einem Förderboden (5) und einer Walzensiebeinheit (7), wobei der Förderboden in der Lage ist, landwirtschaftliche Produkte über ein Ausgabeende der Walzensiebeinheit zuzuführen, deren Walzen im wesentlichen quer zur Transportrichtung des Föderbodens angeordnet sind, dadurch gekennzeichnet, daß ein Ende der Walzensiebeinheit (7) an Bauteilen (15, 16) befestigt ist, die sich zwischen der Walzensiebeinheit (7) und dem Rahmen (1) erstrecken und nahe ihren freien Enden mit der Walzensiebeinheit (7) und dem Rahmen verbunden sind, so daß die Höhe wenigstens des Endes der Walzensiebeinheit (7) in der Nähe des Förderbodens (5) in bezug auf das Ausgabeende des Förderbodens einstellbar ist, wobei die Bauteile (15, 16) zwei Befestigungsplatten (15) aufweisen, zwischen denen das nahe dem Ausgabeende des Förderbodens (5) befindliche Ende der Walzensiebeinheit (7) befestigt ist, wobei jede der Befestigungsplatten (15) mit einem Arm (16) versehen ist, der ein der Walzensiebeinheit (7) abgewandtes Ende aufweist, wobei die der Walzensiebeinheit (7) abgewandten Enden der Arme (16) schwenkbar mit dem Rahmen (1) verbunden sind, und wobei zwischen einem feststehenden Rahmenteil der Schüttvorrichtung einerseits und einem Teil der Walzensiebeinheit (7) oder der Bauteile (15, 16) andererseits wenigstens ein einstellbarer Arm (28) angeordnet ist.

2. Schüttvorrichtung nach Anspruch 1, dadurch gekennzeichnet, daß die Bauteile (15, 16) in bezug zu einer sich quer zur Transportrichtung erstreckenden Mittellinie (12) schwenkbar mit dem Rahmen (1) verbunden sind.

3. Schüttvorrichtung nach Anspruch 2, dadurch gekennzeichnet, daß die Mittellinie (12) mit der Mittellinie (12) eines halbkreisförmigen Umkehrwegs zusammenfällt, den der Förderboden (5) im Betrieb am Ausgabeende zurücklegt.

4. Schüttvorrichtung nach Anspruch 2 oder 3, dadurch gekennzeichnet, daß die Bauteile (15, 16) schwenkbar mit einer Achse (13) verbunden sind, die auch die Achse einer Umlenkrolle des Förderbodens ist.

5. Schüttvorrichtung nach Anspruch 1, dadurch gekennzeichnet, daß die der Walzensiebeinheit (7) abgewandten Enden der Arme (16) im Betrieb eine auf einer Schwenkachse (13) angebrachte Hülse (17) stützen.

6. Schüttvorrichtung nach Anspruch 1, dadurch gekennzeichnet, daß der einstellbare Arm (28) schwenkbar mit wenigstens einer der Befestigungsplatten (15) verbunden ist.

7. Schüttvorrichtung nach Anspruch 1, dadurch gekennzeichnet, daß die Position des einstellbaren Arms (28) mittels einer Zahnstangengetriebevorrichtung einstellbar ist.

8. Schüttvorrichtung nach einem der vorhergehenden Ansprüche, dadurch gekennzeichnet, daß das dem Förderboden (5) abgewandte Ende der Walzensiebeinheit (7) höhenverstellbar (29) angebracht ist.

9. Schüttvorrichtung nach einem der Ansprüche 1-9, gekennzeichnet durch eine Einrichtung (30) zum Einstellen der Höhe des Ausgabeendes des Förderbodens (5).

10. Schüttvorrichtung nach Anspruch 9, dadurch gekennzeichnet, daß das dem Förderboden (5) abgewandte Ende der Rollensiebeinheit (7) in einer festen Höhe angebracht ist.

11. Schüttvorrichtung nach einem der vorhergehenden Ansprüche, dadurch gekennzeichnet, daß der Abstand zwischen den Walzen (23) der Walzensiebeinheit (7) variabel ist.

12. Schüttvorrichtung nach einem der vorhergehenden Ansprüche, gekennzeichnet durch eine Abdichteinrichtung (34), die den Raum zwischen dem Förderboden (5) und der ersten Walze (19) der Walzensiebeinheit abdichtet.

13. Schüttvorrichtung nach Anspruch 12, dadurch gekennzeichnet, daß die Abdichteinrichtung einen flexiblen Abdeckstreifen (34) aufweist.

14. Schüttvorrichtung nach Anspruch 13, dadurch gekennzeichnet, daß der flexible Abdeckstreifen (34) mit einer Längskante an einem Schabeteil (36) befestigt ist, das in Kontakt mit dem Förderboden (5) vorgespannt ist.

15. Schüttvorrichtung nach Anspruch 14, dadurch gekennzeichnet, daß die andere Längskante der Abdeckleiste (34) an einem schwenkbaren länglichen Stützteil (35) angebracht ist, das nahe der ersten Walze (19) der Walzensiebeinheit (7) angeordnet ist, und die Längskante über wenigstens einen Teil des Umfangs um das Stützteil (35) herum angeordnet ist.

16. Schüttvorrichtung nach Anspruch 15, dadurch gekennzeichnet, daß das Stützteil (35) eine drehbare Stützwalze ist.

17. Schüttvorrichtung nach Anspruch 15 oder 16, dadurch gekennzeichnet, daß das längliche Stützteil (35) in einer einstellbaren Entfernung von der ersten Walze (19) der Walzensiebeinheit (7) angebracht ist.

## Revendications

1. Une trémie pour produits agricoles, comprenant un châssis (1), un fond en convoyeur (5) et une unité de criblage à rouleaux (7), le fond en convoyeur étant capable d'alimenter en produits agricoles via une extrémité de décharge ladite unité de criblage à rouleaux, dont les rouleaux sont disposés sensiblement transversalement à la direction de transport du fond en convoyeur, caractérisée en ce qu'une extrémité de l'unité de criblage à rouleaux (7) est montée sur des pièces d'assemblage (15, 16), lesdites pièces d'assemblage s'étendant entre ladite unité de criblage à rouleaux (7) et ledit châssis (1) et étant reliées, à proximité de leurs extrémités libres, à l'unité de criblage à rouleaux (7) et au châssis (1), respectivement, de sorte que la hauteur d'au moins l'extrémité de l'unité de criblage à rouleaux (7) adjacente au fond en convoyeur (5) soit réglable relativement à l'extrémité de décharge du fond en convoyeur, les pièces d'assemblage (15,16) comprenant deux plaques de montage (15) entre lesquelles l'extrémité de l'unité de criblage à rouleaux (7) adjacente à l'extrémité de décharge du fond en convoyeur (5) est montée, en ce que les plaques de montage (15) sont munies chacune d'un bras (16) qui a une extrémité éloignée de l'unité de criblage à rouleaux (7), en ce que les extrémités des bras (16) éloignées de l'unité de criblage à rouleaux (7) sont reliées à pivotement au châssis (1), et en ce qu'entre une partie de châssis fixe de la trémie d'une part et une partie de l'unité de criblage à rouleaux (7) ou les pièces d'assemblage (15,16) d'autre part, au moins un bras ajustable (28) est disposé.

2. Une trémie conforme à la revendication 1, caractérisée en ce que les pièces d'assemblage (15,16) sont reliées à pivotement au châssis (1) relativement à une ligne centrale (12) s'étendant transversalement à la direction de transport.

3. Une trémie conforme à la revendication 2, caractérisée en ce que ladite ligne centrale (12) coïncide avec la ligne centrale (12) d'un chemin d'inversion semi-circulaire traversé à l'extrémité de décharge par le fond en convoyeur (5) en fonctionnement.

4. Une trémie conforme à la revendication 2 ou 3, caractérisée en ce que les pièces d'assemblage (15, 16) sont reliées à un arbre (13), qui est également l'arbre d'un rouleau d'inversion du fond en convoyeur.

5. Une trémie conforme à la revendication 1, caractérisée en ce que les extrémités des bras (16) éloignées de l'unité de criblage à rouleau (7) supporte en fonctionnement un manchon (17) monté sur un arbre de pivotement (13).

6. Une trémie conforme à la revendication 1, caractérisée en ce que le bras réglable (28) et couplé à pivotement à au moins l'une des plaques de montage (15).

7. Une trémie conforme à la revendication 1, caractérisée en ce que la position du bras réglable (28) est réglable au moyen d'un dispositif à crémaillère et pignon.

8. Une trémie conforme à l'une quelconque des revendications précédentes, caractérisée en ce que l'extrémité de l'unité de criblage à rouleau (7) éloignée du fond à convoyeur (5) est montée de manière réglable en hauteur (29).

9. Une trémie conforme à l'une quelconque des revendications 1-8, caractérisée par des moyens de réglage (30) pour régler la hauteur de l'extrémité de décharge du fond en convoyeur (5).

10. Une trémie conforme à la revendication 9, caractérisée en ce que l'extrémité de l'unité de criblage à rouleau (7) éloignée du fond en convoyeur (5) est montée à une hauteur fixe.

11. Une trémie conforme à l'une quelconque des revendications précédentes, caractérisée en ce que la distance entre les rouleaux (23) de l'unité de criblage à rouleau (7) est variable.

12. Une trémie conforme à l'une quelconque des revendications précédentes, caractérisée par des moyens de fermeture qui ferment l'espace entre le fond en convoyeur (5) et le premier rouleau (19) de l'unité de criblage à rouleau.

13. Une trémie conforme à la revendication 12, caractérisée en ce que les moyens de fermeture comprennent une bande de couverture flexible (34).

14. Une trémie conforme à la revendication 13, caractérisée en ce que la bande de couverture flexible (34) a un bord longitudinal fixé à un élément de raclage (36) pré-tendu en contact avec le fond en convoyeur (5).

15. Une trémie conforme à la revendication 14, caractérisée en ce que la bande de couverture (34) a son autre bord longitudinal fixé à un élément de support allongé pivotable (35) disposé adjacent au premier rouleau (19) de l'unité de criblage à rouleaux (7) et est disposée autour de l'élément de support (35) sur au moins une portion de la périphérie de celui-ci.

16. Une trémie conforme à la revendication 15, caractérisée en ce que l'élément de support (35) est un rouleau de support pouvant tourner.

17. Une trémie conforme aux revendications 15 ou 16, caractérisée en ce que l'élément de support allongé (35) est monté à une distance réglable du premier rouleau (19) de l'unité de criblage à rouleaux (7).
